# EUROPÄISCHE PATENTSCHRIFT

(11) **EP 3 183 800 B1**
(45) Veröffentlichungstag und Bekanntmachung des Hinweises auf die Patenterteilung: **20.12.2017**
(21) Anmeldenummer: 15770875.1
(22) Anmeldetag: 25.09.2015
(51) Int. Cl.: H02K 9/22, H02K 11/00, H02K 11/21, H02K 11/225, H02K 11/33, H02K 5/22, H02K 11/215

(54) **ANTRIEBSVORRICHTUNG**
DRIVE DEVICE
DISPOSITIF D'ENTRAÎNEMENT

(30) Priorität: 29.09.2014 DE 102014114129
(43) Veröffentlichungstag der Anmeldung: 28.06.2017
(73) Patentinhaber: Beckhoff Automation GmbH, 33415 Verl (DE)
(72) Erfinder: KRAH, Jens, Onno, 42327 Wuppertal (DE)
(74) Vertreter: Patentanwaltskanzlei WILHELM & BECK
(86) Internationale Anmeldenummer: PCT/EP2015/072116
(87) Internationale Veröffentlichungsnummer: WO 2016/050643

(56) Entgegenhaltungen:
- DE-A1-102005 037 488
- DE-A1-102006 047 269
- FR-A1- 2 903 246

## Beschreibung

Die Erfindung betrifft eine Antriebsvorrichtung.

Die Offenlegungsschrift DE 10 2006 047 269 A1 zeigt einen Umrichtermotor mit den Merkmalen des Obergriffs des Anspruchs 1.

Die Offenlegungsschrift DE 196 22 396 A1 zeigt einen Frequenzumrichter für eine Antriebsvorrichtung. Die Patentschrift US 6,441,353 B1 zeigt eine Antriebseinheit.

Antriebsvorrichtungen als solche sind aus dem Stand der Technik bekannt. So zeigt beispielsweise die Patentschrift EP 2238817 B1 einen Umrichtermotor, der einen Motor und einen Umrichter umfasst. Der Umrichter ist an einer B-Seite des Motors befestigt, wobei der Umrichter thermisch von dem Motor entkoppelt ist. In dem Umrichter sind eine Leistungselektronik und eine Signalelektronik angeordnet. Die Leistungselektronik ist thermisch mit einem Kühlkörper verbunden. Die Signalelektronik ist thermisch mit einer Gehäusewandung eines Umrichtergehäuses verbunden.

Im Allgemeinen ist es so, dass eine Leistungselektronik heißer wird als eine sonstige Elektronik eines Umrichters. Es besteht daher ein Bedarf an einem effizienten Kühlkonzept. Denn üblicherweise ist es so, dass die einzelnen elektronischen Bauteile der Leistungs- und der weiteren Elektronik einer Umrichterelektronik nicht alle die gleiche Temperatur verkraften können. Einige Bauteile sind temperaturfester als andere.

Motorwicklungen - insbesondere die Isolation - sind oft temperaturfest bis 140°C. Elektronische Komponenten sind oft deutlich weniger temperaturfest. Das führt beispielsweise dazu, dass Motoren mit einem elektromechanischen Resolver als Winkelmesssystem eine höhere Betriebstemperatur erreichen dürfen als Motoren mit einem Encoder als Messsystem. Die geringere Temperaturfestigkeit von Encodermotoren führt automatisch zu einem geringeren Bemessungsstrom des Motors, also zu einem geringeren Bemessungsdrehmoment (Rated Torque). Dieses Herunterstufen aufgrund der Elektronik nennt man De-Rating. Umrichtermotoren weisen bisher ein signifikantes De-Rating auf.

Die der Erfindung zugrunde liegende Aufgabe kann daher darin gesehen werden, eine verbesserte Antriebsvorrichtung bereitzustellen, die ein effizientes Kühlkonzept bereitstellt, so dass elektronische Bauteile mit unterschiedlichen Temperaturempfindlichkeiten im Betrieb der Antriebsvorrichtung verwendet werden können, ohne dass die Bauteile durch die während des Betriebs vorherrschenden Temperaturen Schaden nehmen.

Diese Aufgabe wird mittels des Gegenstands des unabhängigen Anspruchs gelöst. Vorteilhafte Ausgestaltungen der Erfindung sind Gegenstand von jeweils abhängigen Unteransprüchen.

Nach einem Aspekt der Erfindung wird eine Antriebsvorrichtung bereitgestellt, umfassend: einen Elektromotor, wobei B-seitig am Elektromotor ein erster Aufnahmebereich für eine Umrichterleistungselektronik und ein zweiter Aufnahmebereich für weitere Elektronik gebildet sind, wobei die beiden Aufnahmebereiche mittels einer thermischen Isolation voneinander thermisch entkoppelt sind, so dass im Betrieb des Elektromotors eine erste Temperaturzone im ersten Aufnahmebereich und eine zweite Temperaturzone im zweiten Aufnahmebereich gebildet werden können.

Die Erfindung umfasst also den Gedanken, B-seitig am Elektromotor zwei Aufnahmebereiche vorzusehen, die mittels einer thermischen Isolation voneinander thermisch entkoppelt sind. Durch den Betrieb des Elektromotors wird Abwärme erzeugt, die zu einer Temperaturerhöhung an der B-Seite des Elektromotors führt. Da aber die beiden Aufnahmebereiche thermisch voneinander entkoppelt sind, herrschen in den entsprechenden Temperaturzonen unterschiedliche Temperaturen, so dass in vorteilhafter Weise elektronische Bauteile abhängig von ihrer Temperaturfestigkeit oder ihrer Temperaturempfindlichkeit und von ihrem Kühlbedarf (,üblicherweise müssen Leistungstransistoren entwärmt werden,) in den entsprechenden Temperaturzonen, also in den entsprechenden Aufnahmebereichen, angeordnet werden können. So können also die Bauteile mit einer erhöhten Temperaturfestigkeit in der Temperaturzone angeordnet werden, in welcher eine höhere Temperatur herrscht verglichen mit der anderen Temperaturzone. In die andere Temperaturzone können dann die Bauteile angeordnet werden, die nur geringere Temperaturen verkraften können. Dadurch ist also in vorteilhafter Weise ein effizientes Kühlkonzept geschaffen.

Die B-Seite des Elektromotors bezeichnet die Seite des Elektromotors, die der A-Seite des Elektromotors gegenüberliegt. Die A-Seite bezeichnet diejenige Seite des Elektromotors, an welcher eine Motorwelle des Elektromotors einen Abtrieb bereitstellt.

Nach einer Ausführungsform ist vorgesehen, dass der erste Aufnahmebereich mittels eines Lagerschilds des Elektromotors gebildet ist. Dadurch wird insbesondere der technische Vorteil bewirkt, dass ein bereits vorhandener Lagerschild des Elektromotors effizient genutzt werden kann.

In einer anderen Ausführungsform ist vorgesehen, dass eine Befestigungseinrichtung für Leistungstransistoren der Umrichterleistungselektronik im ersten Aufnahmebereich angeordnet ist, insbesondere lösbar angeordnet. Dadurch wird insbesondere der technische Vorteil bewirkt, dass bei der lösbaren Anordnung die Befestigungseinrichtung mit den Leistungstransistoren im Fehlerfall oder bei einem Ausfall der Leistungstransistoren einfach ausgetauscht werden kann. Allgemein wird durch die Befestigungseinrichtung der technische Vorteil bewirkt, dass Leistungstransistoren sicher im ersten Aufnahmebereich befestigt werden können.
In einer Ausführungsform ist vorgesehen, dass die Befestigungseinrichtung ausgebildet ist, um Leistungstransistoren lösbar zu befestigen. Dadurch wird insbesondere der technische Vorteil bewirkt, dass die Leistungstransistoren im Fehlerfall oder bei einem Ausfall einfach aus der Befestigungseinrichtung entnommen werden können.
Gemäß einer weiteren Ausführungsform ist vorgesehen, dass die Befestigungseinrichtung zumindest eine Platte mit zumindest einer auf der Platte befestigten Federklemme zum Festklemmen eines Leistungstransistors umfasst. Dadurch wird insbesondere der technische Vorteil bewirkt, dass die Leistungstransistoren einfach eingesetzt oder entnommen werden können, ohne dass hierfür zusätzliches Werkzeug benötigt wird. Ein Hitzeschild ist mit einem in den ersten Aufnahmebereich hineinragenden Abschnitt gebildet, wobei der Hitzeschild mittels der thermischen Isolation von dem ersten Aufnahmebereich thermisch entkoppelt ist, wobei der hineinragende Abschnitt einen dritten Aufnahmebereich für einen Positionsgeber umfasst.
Dadurch wird insbesondere der technische Vorteil bewirkt, dass ein Raum in dem ersten Aufnahmebereich auch für Bauteile genutzt werden kann, die im Betrieb des Elektromotors nicht für die Temperatur in der ersten Temperaturzone spezifiziert sind. Denn mittels des Hitzeschilds ist eine Abschirmung der aus der in der ersten Temperaturzone herrschenden Temperatur resultierenden Hitzestrahlung bewirkt. Der Hitzeschild, hier insbesondere der hineinragende Abschnitt, wirkt als Schild gegen die Hitzestrahlung oder Wärmestrahlung und auch gegen durch Konvektion bedingten Wärmefluss, indem dieser Wärmefluss mittels des Hitzeschilds nach außen abgeleitet wird, so dass sich die elektronischen Komponenten in dem dritten Aufnahmebereich nicht aufwärmen.

Gemäß einer weiteren Ausführungsform ist vorgesehen, dass der Hitzeschild mit dem zweiten Aufnahmebereich thermisch gekoppelt ist, so dass die zweite Temperaturzone in den ersten Aufnahmebereich verlängert werden kann.

Die Temperatur, die in der zweiten Temperaturzone vorliegt, wird aufgrund der thermischen Ankopplung zumindest teilweise auch in dem dritten Aufnahmebereich vorliegen, zumindest wird sich ein Temperaturgradient von der Temperatur der zweiten Temperaturzone zu der Temperatur der ersten Temperaturzone ausbilden, so dass im dritten Aufnahmebereich in der Regel eine Temperatur herrscht, die deutlich näher an der Temperatur des zweiten Aufnahmebereichs liegt als an der Temperatur des ersten Aufnahmebereichs.

In einer anderen Ausführungsform ist vorgesehen, dass der Hitzeschild ein Blech mit einem angeflanschten Rohr als hineinragenden Abschnitt umfasst. Dadurch wird insbesondere der technische Vorteil bewirkt, dass im Rohr effizient und einfach der Positionsgeber aufgenommen werden kann. Über das Blech ist in vorteilhafter Weise eine einfache Befestigung des Hitzeschilds an andere Bauteile ermöglicht. Ein Blech nimmt aufgrund seiner dünnen Ausgestaltung in vorteilhafter Weise nicht viel Platz weg und hat auch nicht so viel Masse im Vergleich zu einem Hitzeschild, welches kein Blech umfasst, sondern dickere Elemente. Es wird also in vorteilhafter Weise eine Gewichtsersparnis bewirkt.

Gemäß einer anderen Ausführungsform ist vorgesehen, dass der erste Aufnahmebereich mit dem Elektromotor thermisch gekoppelt ist. Dadurch wird insbesondere der technische Vorteil bewirkt, dass der zweite Aufnahmebereich aufgrund der thermischen Isolation thermisch von dem Elektromotor entkoppelt ist, so dass die Temperatur in der zweiten Temperaturzone im Betrieb des Elektromotors kleiner sein wird als in der ersten Temperaturzone. Elektronische Bauteile, die temperaturempfindlich sind, können so in dem zweiten Aufnahmebereich angeordnet werden. In dem ersten Aufnahmebereich können somit elektronische Bauteile angeordnet werden, die temperaturfester sind und insofern für höhere Temperaturen spezifiziert sind, beispielsweise Temperaturen, wie sie im Betrieb des Elektromotors auftreten.

Nach noch einer Ausführungsform ist vorgesehen, dass der erste Aufnahmebereich einen in sich geschlossenen Rahmen umfasst. Dadurch wird insbesondere der technische Vorteil bewirkt, dass ein stabiles Mittel gegeben ist, um die Leistungstransistoren zu befestigen. Denn ein Rahmen ist in der Regel ein stabiles Befestigungsmittel. Insbesondere ist vorgesehen, dass an gegenüberliegenden Innenseiten des Rahmens die Leistungstransistoren befestigt werden. Die Innenseiten deshalb, da die den Innenseiten gegenüberliegenden Außenseiten des Rahmens den Leistungstransistoren Schutz bieten.

In einer anderen Ausführungsform ist vorgesehen, dass der erste Aufnahmebereich eine Grundplatte umfasst, auf welcher der Rahmen als Kühlkörper angeordnet ist. Dadurch ist insbesondere der technische Vorteil bewirkt, dass der Rahmen einen Kühlkörper zur Verringerung der Temperatur in der ersten Temperaturzone bildet. Die Grundplatte nimmt insbesondere die Leistungstransistoren auf. Das heißt also, dass nach einer Ausführungsform die Leistungstransistoren an der Grundplatte befestigt sind.

Gemäß einer anderen Ausführungsform ist vorgesehen, dass die Isolation einen in sich geschlossenen Kunststoffrahmen umfasst, der mit dem Rahmen kraftschlüssig und/oder formschlüssig befestigt ist. Dadurch wird insbesondere der technische Vorteil bewirkt, dass ein guter thermischer Isolator, hier der Kunststoff, gegeben ist. Der Rahmen ist eine stabile und einfach herzustellende Form, so dass eine Herstellung des Kunststoffrahmens einfach möglich ist. Kraftschluss und/oder Formschluss sind in der Regel gute Befestigungsmöglichkeiten, so dass eine zuverlässige Befestigung des Kunststoffrahmens an dem Rahmen bewirkt ist. Nach einer Ausführungsform handelt es sich bei der kraftschlüssigen und/oder formschlüssigen Befestigung um eine lösbare kraftschlüssige und/oder lösbare formschlüssige Verbindung oder Befestigung.

Gemäß einer weiteren Ausführungsform ist vorgesehen, dass im ersten Aufnahmebereich als Umrichterleistungselektronik Siliciumcarbid (SiC)-MOSFETs angeordnet sind. SiC-MOSFETs zeichnen sich durch sehr niedrige Verluste und eine besonders hohe Temperaturfestigkeit aus (200 °C). Somit kann bei der Verwendung von SiC-MOSFETs als Leistungstransistoren für einen Umrichter auf aufwendige und große und schwere Kühlkörper verzichtet werden. Insbesondere kann auf einen Lüfter verzichtet werden.

Des Weiteren weisen SiC-MOSFETs besondere vorteilhafte Eigenschaften auf: bei SiC-MOSFETs kann in vorteilhafter Weise die immer vorhandene MOSFET Body-Diode als Freilaufdiode genutzt werden, die bei den SiC-MOSFETs eine sehr geringe Sperrverzögerungszeit aufweist. Dies verringert in vorteilhafter Weise Schaltverluste.

Ferner kann ein Kanal des SiC-MOSFETs im eingeschalteten Zustand den Strom in beide Richtungen führen (ein sogenannter Synchronous Rectifier). Dies verringert den Spannungsabfall über der Freilaufdiode und damit die Durchlassverluste. Siliciumcarbid-MOSFETs weisen im Gegensatz zu bekannten IGBTs nicht den IGBT-typischen Tailstrom beim Abschalten auf. Auch dies verringert Schaltverluste.

Nach einer Ausführungsform ist ein Positionsgeber, insbesondere ein Encoder oder Resolver, vorgesehen, der insbesondere in dem hineinragenden Abschnitt des Hitzeschildes angeordnet ist. In der Regel ist ein Encoder weniger hitzefest als ein Resolver, so dass das Vorsehen eines Hitzeschilds für einen Encoder technisch besonders sinnvoll und vorteilhaft ist.

Gemäß einer weiteren Ausführungsform ist vorgesehen, dass in dem ersten Aufnahmebereich die Umrichterleistungselektronik, insbesondere die Umrichterleistungstransistoren (vorzugsweise 6 Umrichterleistungstransistoren), angeordnet ist.

Nach einer weiteren Ausführungsform ist vorgesehen, dass in dem zweiten Aufnahmebereich weitere Elektronik eines Umrichters angeordnet ist, welche verschieden von einer Umrichterleistungselektronik ist. Insbesondere sind in dem zweiten Aufnahmebereich ein oder mehrere elektronische Bauteile angeordnet, die weniger Verlustleistung abgeben als die Umrichterleistungselektronik. Die weitere Elektronik umfasst beispielsweise eine Steuerelektronik (zum Beispiel: einen Prozessor und/oder eine programmierbare Logik, beispielsweise FPGA "Field Programmable Gate Array"; auf Deutsch: (Anwendungs-)Feld programmierbare (Logik-)Gatter-Anordnung) für zum Beispiel den Positionsgeber und/oder für den Elektromotor und/oder eine Signalelektronik für zum Beispiel den Positionsgeber und/oder für den Elektromotor.

Das heißt also, dass nach einer Ausführungsform die Antriebsvorrichtung einen Umrichter umfasst, der B-seitig am Elektromotor angeordnet ist, wobei die Umrichterleistungselektronik, insbesondere die Umrichterleistungstransistoren (vorzugsweise 6 Umrichterleistungstransistoren), in dem ersten Aufnahmebereich angeordnet ist, wobei die weitere Elektronik des Umrichters, die verschieden von der Umrichterleistungselektronik ist, in dem zweiten Aufnahmebereich angeordnet ist.

Nach einer Ausführungsform ist die Antriebsvorrichtung Teil eines Automatisierungssystems.

Nach einer Ausführungsform ist die Antriebsvorrichtung Teil eines Robotors, insbesondere eines Robotors eines Automatisierungssystems.

Nach einer weiteren Ausführungsform ist vorgesehen, dass der zweite Aufnahmebereich ein Gehäuse umfasst oder als ein solches gebildet ist. Das Gehäuse ist oder umfasst beispielsweise eine Metallkappe.

Die Erfindung wird im Folgenden anhand von bevorzugten Ausführungsbeispielen unter Bezugnahme auf Figuren näher erläutert. Hierbei zeigen
Fig. 1-5 jeweils verschiedene Zeitpunkte bei der Montage einer Antriebsvorrichtung,
Fig. 6 eine Antriebsvorrichtung,
Fig. 7 eine Befestigungseinrichtung mit Leistungstransistoren,
Fig. 8 einen ersten Aufnahmebereich mit Leistungstransistoren,
Fig. 9-13 jeweils einen Zeitpunkt bei einer Montage einer Antriebsvorrichtung und
Fig. 14 eine Antriebsvorrichtung.

Im Folgenden können für gleiche Merkmale gleiche Bezugszeichen verwendet werden.

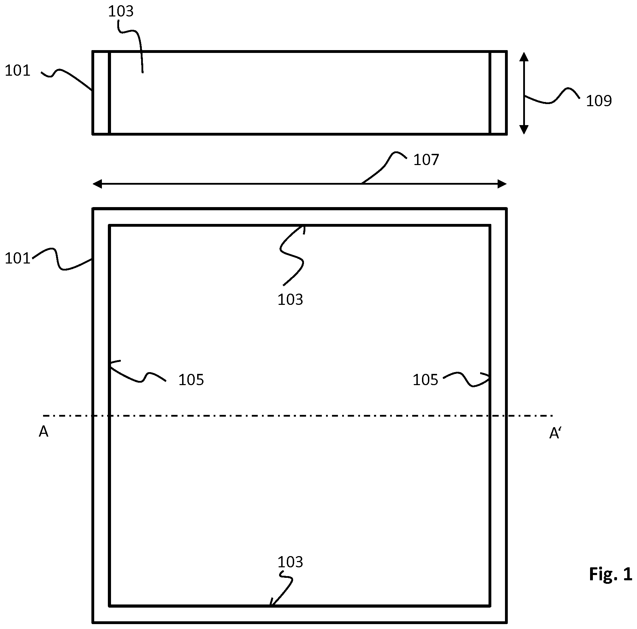

Fig. 1 bis 5 zeigen jeweils einen Zeitpunkt bei einer Montage einer Antriebsvorrichtung. Hierbei zeigt jeweils die untere Zeichnung in den Figuren eine Draufsicht. Die obere Zeichnung in den Figuren zeigt eine geschnittene Seitenansicht entlang der gestrichelten Linie A-A' gemäß der Draufsicht.

Fig. 1 zeigt einen Rahmen 101, der beispielsweise aus Aluminium gebildet ist. Der Rahmen 101 ist ein viereckiger Rahmen und in sich geschlossen. Beispielsweise weist der Rahmen 101 eine Quadratform auf. Aufgrund der in sich geschlossenen Bauweise des Rahmens 101 sind jeweils gegenüberliegende Innenseiten 103 und 105 gebildet. Eine Höhe des Rahmens ist symbolisch mit einem Doppelpfeil mit dem Bezugszeichen 109 dargestellt. Die Höhe beträgt beispielsweise 20 mm. Eine Breite des Rahmens ist symbolisch mit einem Doppelpfeil mit dem Bezugszeichen 107 dargestellt. Eine Breite des Rahmens 101 beträgt beispielsweise 100 mm.

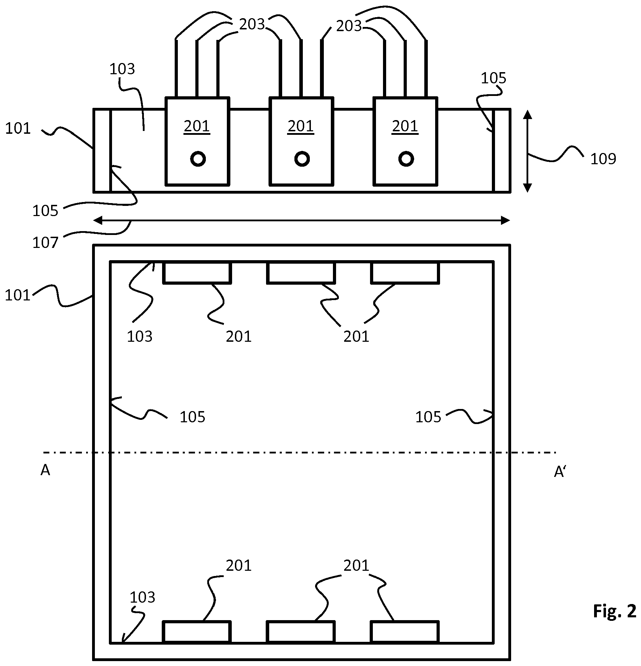

Fig. 2 zeigt den Rahmen 101, wobei an zwei gegenüberliegenden Innenseiten 103 des Rahmens 101 jeweils drei Leistungstransistoren 201 einer Umrichterleistungselektronik angeordnet sind. Die sechs Leistungstransistoren 201 sind beispielsweise Siliciumcarbid-MOSFETs. Das heißt also, dass an einer Innenseite 103 drei Leistungstransistoren 201 angeordnet sind. Somit sind also insgesamt sechs Leistungstransistoren 201 am Rahmen 101 befestigt. Das Bezugszeichen 203 zeigt auf drei elektrische Anschlusspins eines Leistungstransistors 201.

Die Verwendung von Siliciumcarbid-MOSFETs weist insbesondere den technischen Vorteil auf, dass diese für eine Temperatur von bis zu 200 °C spezifiert sind, ohne beschädigt zu werden. Hier ist in der Regel die Sperrschicht der SiC-MOSFETs für Temperaturen bis zu 200 °C spezifiert. Dies prädestiniert diese Leistungstransistoren 201 für den Einsatz in der Nähe eines Elektromotors. Daher ist es besonders vorteilhaft, solche Leistungstransistoren für eine Umrichterleistungselektronik eines Umrichters zu verwenden. Dies ist nach einer Ausführungsform erfindungsgemäß vorgesehen.

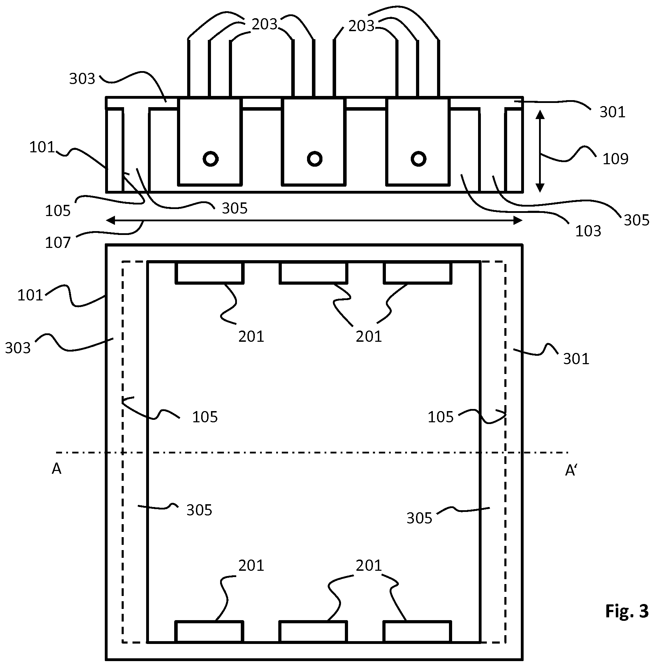

Fig. 3 zeigt die Anordnung gemäß Fig. 2 mit einem Kunststoffrahmen 301, der als eine thermische Isolation wirkt Das heißt, dass der Kunststoffrahmen 301 eine thermische Isolation ist. Der Kunststoffrahmen 301 weist einen Basisabschnitt 303 auf, von welchem senkrecht Schenkel 305 abstehen. Der Kunststoffrahmen 301 wird mit seiner Basisfläche 303 oder seinem Basisabschnitt 303 auf den Rahmen 101 gesetzt. Der Kunststoffrahmen 301 ist derart dimensioniert und gebildet, dass die Schenkel 305 an gegenüberliegenden Innenwänden 105 des Rahmens 101 anliegen, so dass eine formschlüssige Befestigung des Rahmens 101 mit dem Kunststoffrahmen 301 bewirkt ist.

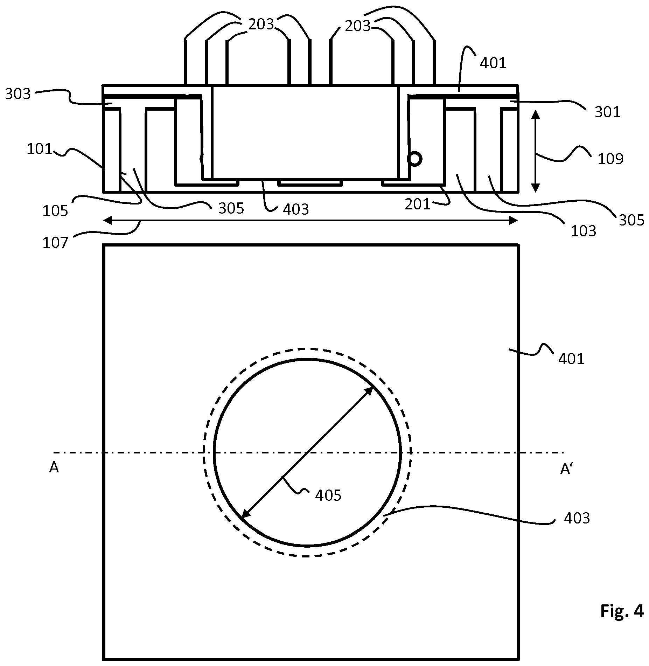

Fig. 4 zeigt die Anordnung gemäß Fig. 3 mit einem Blech 401. Das Blech 401 weist eine dem Rahmen 101 angepasste Form auf, wobei mittig im Blech 401 ein Rohr 403 angeflanscht ist. Dieses Rohr 403 steht senkrecht vom Blech 401 ab. Das Blech 401 sowie das Rohr 403 sind beispielsweise aus Aluminium gebildet. Eine Dicke des Blechs 401 beträgt beispielsweise 2 mm. Das Blech 401 wird auf den Kunststoffrahmen 301 gesetzt, genauer auf die Basisfläche 303, so dass das Rohr 403 in den Rahmen 101 hineinragt, genauer in den Raum, den der Rahmen 101 umgibt oder einrahmt.

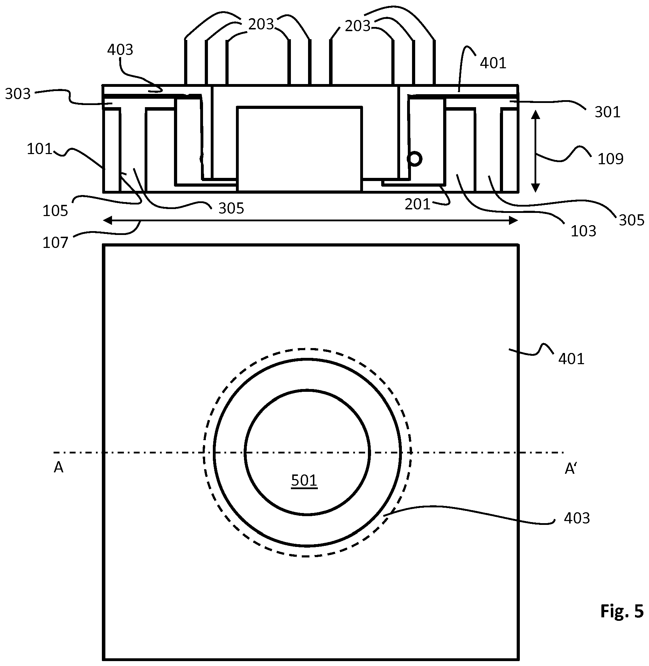

Das Bezugszeichen 405 zeigt auf einen Doppelpfeil, der symbolisch einen Durchmesser des Rohrs 403 darstellt. Hierbei ist der Durchmesser 405 an übliche Dimensionen und Größen eines Encoders 501 (vgl. Fig. 5) angepasst.

Fig. 5 zeigt die Anordnung gemäß Fig. 4, wobei in dem Rohr 403 ein Encoder 501 als ein Positionsgeber für eine Motorwelle eines Elektromotors (nicht gezeigt) angeordnet ist.

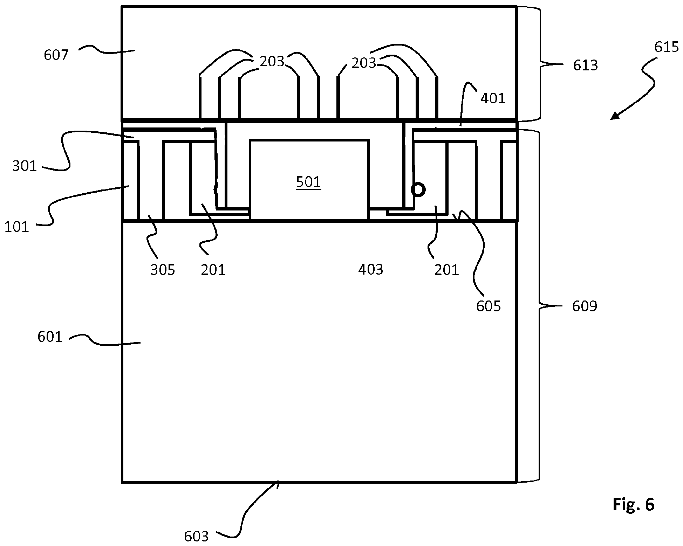

Fig. 6 zeigt die Anordnung gemäß Fig. 5 mit einem Elektromotor 601. Der Elektromotor 601 weist eine A-Seite 603, die eine hier nicht gezeigte Abtriebswelle umfasst, und eine der A-Seite gegenüberliegende B-Seite 605 auf. Die in Fig. 4 gezeigte Anordnung ist B-seitig, also an der B-Seite 605 des Elektromotors 601, angeordnet. Hierbei ist der Rahmen 101 thermisch mit dem Elektromotor 601 verbunden oder gekoppelt.
Auf das Blech 401 ist ein Gehäuse 607 angeordnet oder aufgesetzt, wobei in dem Gehäuse 607 weitere Elektronik eines Umrichters angeordnet werden kann und nach einer Ausführungsform auch ist. Der Kunststoffrahmen 301 bildet eine thermische Isolation zwischen dem Rahmen 101, der mit dem Elektromotor 601 thermisch gekoppelt ist, und dem Gehäuse 607 für die weitere Elektronik. Das heißt also, dass das Gehäuse 607 und der Rahmen 101 thermisch voneinander entkoppelt sind. Dadurch wird insbesondere der technische Vorteil bewirkt, dass das Gehäuse 607 auch von dem Elektromotor 601 thermisch entkoppelt ist. Somit wird also im Betrieb des Elektromotors 601 ein Innenraum des Gehäuses 607 nicht so heiß werden wie ein Innenraum in dem Rahmen 101. Dadurch wird in vorteilhafter Weise ein Aufnahmebereich gebildet, in welchem elektronische Bauteile, zum Beispiel elektronische Bauteile einer Umrichterelektronik, angeordnet werden können, wobei diese Bauteile dann nicht für die gleiche Temperatur spezifiziert sein müssen wie die Bauteile, hier die Leistungstransistoren 201, des Rahmens 101.
Somit bildet der Rahmen 101 einen ersten Aufnahmebereich. Das Gehäuse 607 bildet einen zweiten Aufnahmebereich. Beide

Aufnahmebereiche sind thermisch voneinander entkoppelt. Dies mittels des Kunststoffrahmens 301. Im Betrieb des Elektromotors 601 wird sich also eine erste Temperaturzone 609 in dem Rahmen 101 ausbilden und es wird sich eine zweite Temperaturzone 613 in dem Gehäuse 607 ausbilden. Beide Temperaturzonen 609, 613 sind unterschiedlich. Das heißt, dass in dem Gehäuse 607 eine geringere Temperatur herrschen wird als in dem Rahmen 101. Beispielsweise beträgt eine Temperatur in der ersten Temperaturzone 609 zwischen 90 °C und 100 °C. Aufgrund der thermischen Isolation beträgt eine Temperatur in dem Gehäuse 607, also in der zweiten Temperaturzone 613 beispielsweise 70 °C bis 80 °C.

In dem Gehäuse 607 ist beispielsweise eine Elektronik zur Ankopplung des Encoders 501 angeordnet.

Alternativ zu dem Encoder 501 ist nach einer nicht gezeigten Ausführungsform vorgesehen, dass ein Resolver für eine Positionserfassung einer hier nicht im Detail dargestellten Motorwelle des Elektromotors 601 vorgesehen ist.

Die in Fig. 6 gezeigte Anordnung ist in ihrer Gesamtheit mit dem Bezugszeichen 615 gekennzeichnet und bildet eine Antriebsvorrichtung.

Die Erfindung umfasst also insbesondere den Gedanken, B-seitig an einen Elektromotor einen Umrichter anzuflanschen, wobei durch eine Temperaturabschirmung (Kunststoffrahmen) eine Bildung einer "heißen" Seite (erste Temperaturzone 609) und einer "kalten" Seite (zweite Temperaturzone 613) sehr kompakt möglich ist.

Dadurch, dass das Blech 401 mit dem Rohr 403 auf dem Kunststoffrahmen 301 aufgesetzt ist und das Rohr 403 in den Rahmen 101 hineinragt, ist das Blech 401 auch thermisch von dem Rahmen 101 und von dem Elektromotor 601 entkoppelt. Die zweite Temperaturzone 613 in dem Gehäuse 607 wird somit in vorteilhafter Weise in den Rahmen 101 verlängert. Das heißt also, dass in dem Rahmen 101 selbst ein Raum gebildet wird, in welchem eine geringere Temperatur herrschen wird im Betrieb des Elektromotors 601 als außerhalb dieses Raums, also außerhalb des Rohrs 403. Hierbei wirkt das Rohr 403 als ein Hitzeschild gegen Hitzestrahlung, die aus der Abwärme des Elektromotors 601 im Betrieb resultiert.

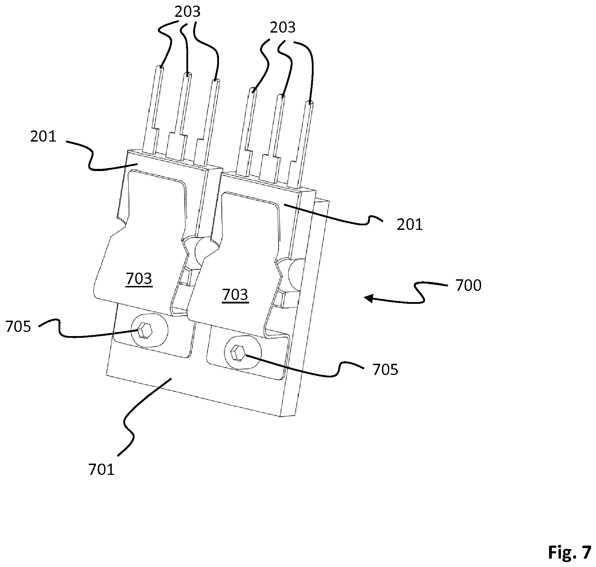

Fig. 7 zeigt eine Befestigungseinrichtung 700 für Leistungstransistoren 201. Die Befestigungseinrichtung 700 umfasst eine Platte 701, auf welcher zwei Federklemmen 703 mittels jeweils einer Schraube 705 angeschraubt sind. In den Federklemmen 703 wird jeweils ein Leistungstransistor 201 festgeklemmt.

Weitere Vorteile dieser in Fig. 7 gezeigten Befestigungseinrichtung 700 sind zum Beispiel:
Eine einfache Austauschbarkeit und aufgrund der Federkraft eine gute thermische Anbindung der Leistungstransistoren 201 an den Platten 701.

Die Platte 701 ist in einer nicht gezeigten Ausführungsform auch durch den Rahmen 101 gemäß den Figuren 1-6 gebildet. Das heißt, dass der Rahmen 101 Federklemmen 703 aufweist, in welchen die Leistungstransistoren 201 festgeklemmt werden können respektive sind.

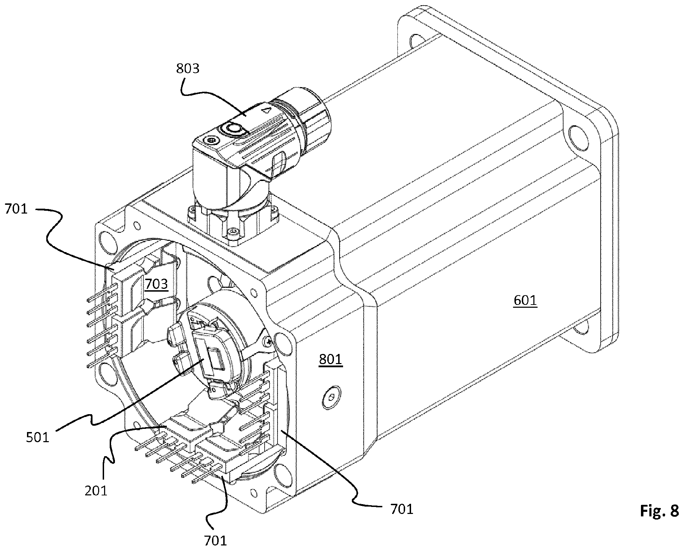

Fig. 8 zeigt eine Befestigungseinrichtung 700 analog zu der Anordnung gemäß Fig. 7. Dieses Mal allerdings umfasst die Befestigungseinrichtung 700 drei Platten 701 gemäß der Anordnung der Fig. 7. Diese drei Platten 701 mit jeweils zwei festgeklemmten Leistungstransistoren 201 sind an einem Außenrand einer Außenseite eines Lagerschilds 801 eines Elektromotors, zum Beispiel dem Elektromotor 601, angeordnet. In einer solchen Ausgestaltung wird auf den Rahmen 101 verzichtet. Der Lagerschild 801 bildet selbst den ersten

Aufnahmebereich für die Leistungstransistoren 201. Ungeachtet dessen ist auch in der Ausgestaltung gemäß Fig. 8 vorgesehen, dass in analoger Weise zu den Fig. 3 bis 6 ein Kunststoffrahmen 301 auf den Lagerschild 801 angeordnet wird, wobei dann auf den Kunststoffrahmen 301 ein Blech 401 mit angeflanschtem Rohr 403 aufgesetzt wird und darauf dann das Gehäuse 607.

Das Bezugszeichen 803 zeigt auf einen Stecker, der am Lagerschild 801 angeordnet ist und für eine elektrische Kontaktierung der Antriebsvorrichtung 601 dient.

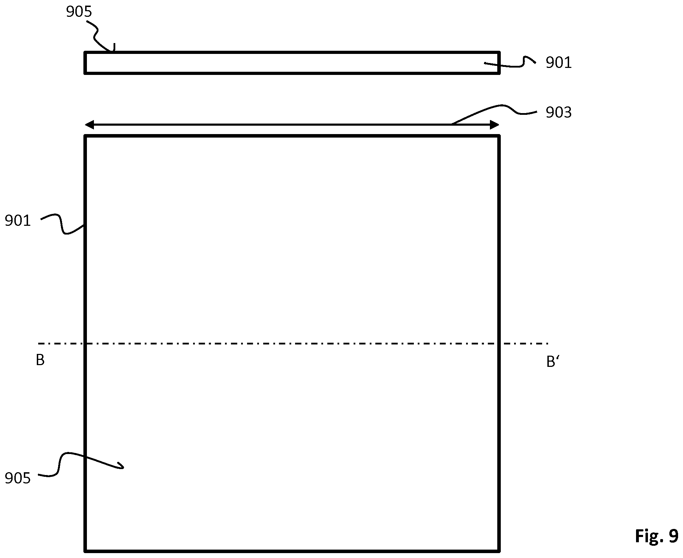

Fig. 9 bis 13 zeigen analog zu den Fig. 1 bis 5 jeweils einen Zeitpunkt bei einer Montage einer Antriebsvorrichtung. Die untere Zeichnung in den Fig. 9 bis 13 zeigt eine Draufsicht. Die obere Zeichnung in den Fig. 9 bis 13 zeigt eine geschnittene Seitenansicht entlang einer gestrichelten Linie B-B' gemäß der Draufsicht.

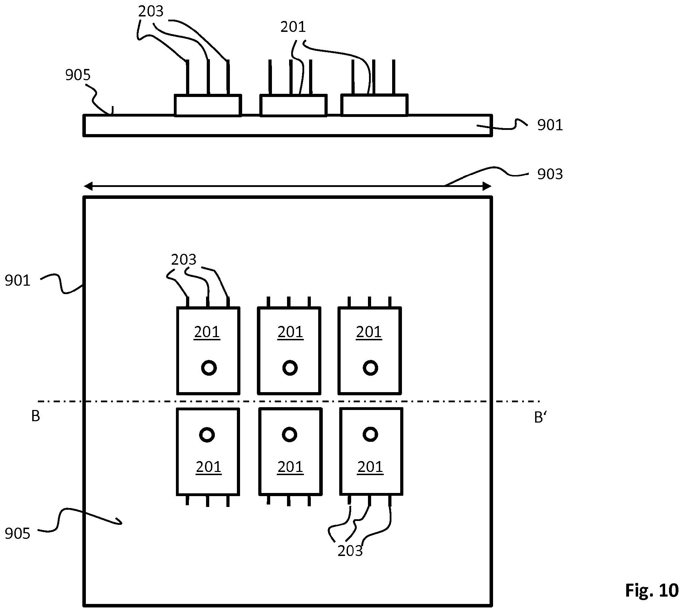

Fig. 9 zeigt eine Grundplatte 901, die beispielsweise aus Aluminium gebildet ist. Auf einer Montagefläche 905 der Grundplatte 901 werden, wie Fig. 10 zeigt, sechs Leistungstransistoren 201 montiert. Das Bezugszeichen 903 zeigt auf einen Doppelpfeil, der symbolisch eine Breite der Grundplatte 901 kennzeichnet. Die Breite beträgt beispielsweise 100 mm. Die Grundplatte 901 ist viereckig und beispielsweise quadratisch gebildet. Beispielsweise wird die Grundplatte 901 anstelle einer B-seitigen Abdeckung des Elektromotors 601 verwendet.

Wie bereits ausgeführt, zeigt die Fig. 10 die Grundplatte 901 mit sechs Leistungstransistoren 201, die auf der Montagefläche 905 angeordnet sind. Die Leistungstransistoren 201 sind beispielsweise Siliciumcarbid-MOSFETs. Im Unterschied zu den in Fig. 1-5 gezeigten
Leistungstransistoren 201 weisen die in den Figuren 9 bis 14 gezeigten Leistungstransistoren 201 abgewinkelte Anschlusspins 203 auf.

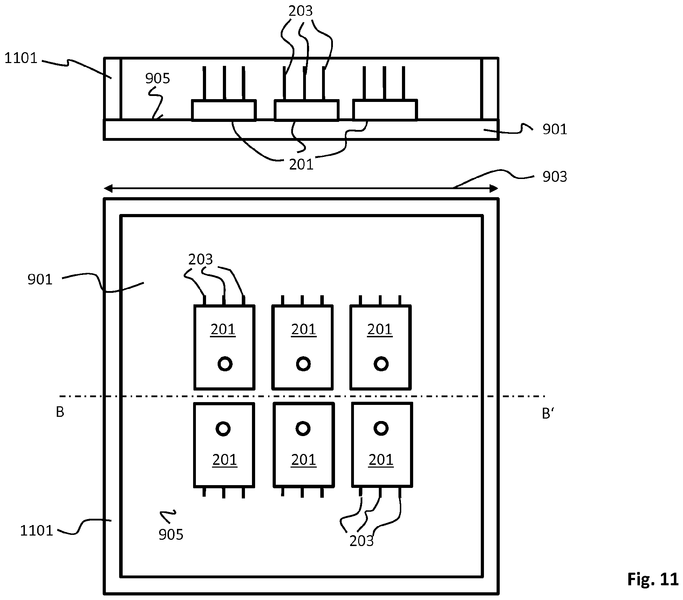

Fig. 11 zeigt die Anordnung gemäß Fig. 10, wobei auf der Montagefläche 905 ein Rahmen 1101, der beispielsweise aus Aluminium gebildet ist, aufgesetzt oder angeordnet ist. Hierbei ist die Kontur oder die Abmaßung des Rahmens 1101 derart, dass sie der Kontur oder der Geometrie der Grundplatte 901 entspricht. Das heißt also, dass der Rahmen 1101 bündig mit Außenkanten der Grundplatte 901 abschließt. Der Rahmen 1101 wirkt in vorteilhafter Weise als Kühlkörper, so dass hierüber eine Kühlung der Leistungstransistoren 201 bewirkt ist.

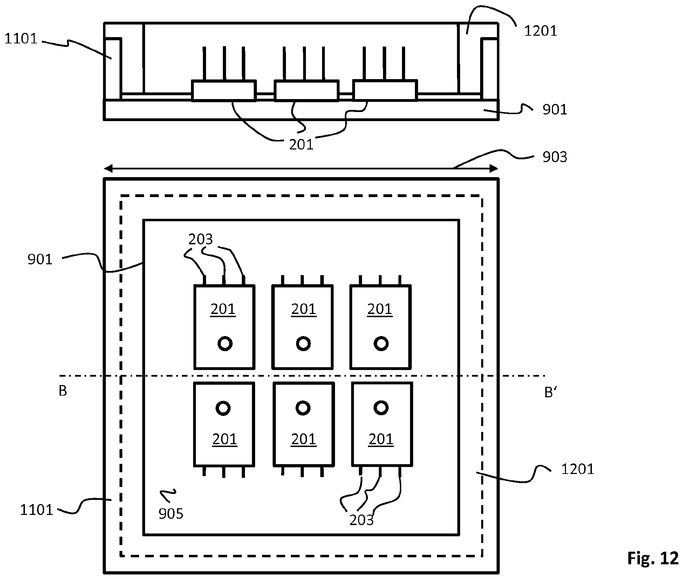

Fig. 12 zeigt die Anordnung gemäß Fig. 11, wobei ein Kunststoffrahmen 1201 vorgesehen ist, der auf dem Rahmen 1101 aufgesetzt oder angeordnet ist. Dieser Kunststoffrahmen 1201 wirkt als eine thermische Isolation. Denn die Grundplatte 901 mit ihrer Montagefläche 905 bildet einen ersten Aufnahmebereich für eine Umrichterleistungselektronik, hier die Leistungstransistoren 201. Dieser erste Aufnahmebereich wird mittels des Kunststoffrahmens 1201 thermisch von einem im Folgenden noch näher dargestellten und erläuterten zweiten Aufnahmebereich entkoppelt.

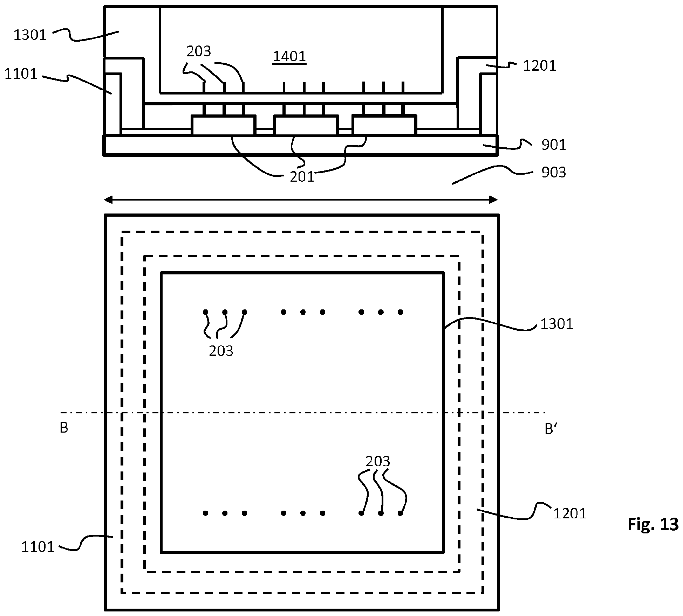

Fig. 13 zeigt die Anordnung gemäß Fig. 12, wobei auf dem Kunststoffrahmen 1201 ein weiterer Rahmen 1301, der beispielsweise aus Aluminium gebildet ist, aufgesetzt oder angeordnet ist. Auch hier schließt der weitere Rahmen 1301 bündig mit Außenkanten der Grundplatte 901 und des Kunststoffrahmens 1201 ab.

In dem weiteren Rahmen 1301, der also einen zweiten Aufnahmebereich bildet, können beispielsweise weitere elektronische Bauteile einer Umrichterelektronik aufgenommen werden, was nach einer Ausführungsform auch vorgesehen ist. Aufgrund des Kunststoffrahmens 1201 sind der weitere Rahmen 1301 und die Grundplatte 901 mit dem aufgesetzten Rahmen 1101 thermisch voneinander entkoppelt. Das heißt also, dass bei einer thermischen Ankopplung der Grundplatte 901, die nach einer Ausführungsform so vorgesehen ist, an der B-Seite des Elektromotors 601 auch der weitere Rahmen 1301 thermisch von dem Elektromotor 601 entkoppelt ist.

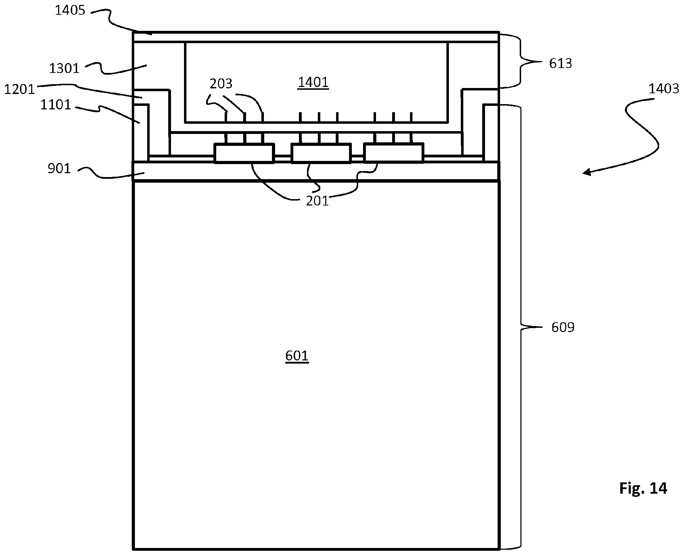

Fig. 14 zeigt die Anordnung gemäß Fig. 13 mit dem an der Grundplatte 901 angeflanschten oder angeordneten Elektromotor 601.

Analog zu dem Bauteil 615 gemäß Fig. 6 bildet sich somit entsprechend eine erste Temperaturzone 609 und eine zweite Temperaturzone 613 in dem ersten respektive zweiten Aufnahmebereich aus.

In dem weiteren Rahmen 1301 ist beispielsweise eine Steuerungselektronik 1401 des Umrichters angeordnet, wobei der weitere Rahmen 1301 mittels eines Gehäusedeckels 1405 verschließbar ist.

Die Aufteilung von den Höhen der Rahmen 1101 und 1301 ist beispielsweise abhängig von den Leistungen der Leistungstransistoren 201 und der Steuerungselektronik 1401. Ein Optimierungskriterium ist beispielsweise ein maximales Drehmoment (das einem maximalen Strom entspricht) bei Einhaltung der Temperaturspezifikationen der einzelnen elektronischen Bauteile.

Anstelle der sechs Leistungstransistoren 201 kann nach einer alternativen Ausführungsform auch ein Sixpackmodul verwendet werden, bei dem 6 Transistoren vom Halbleiterhersteller in einem Gehäuse (=Modul) untergebracht oder angeordnet werden. Die Antriebsvorrichtung wird nach einer Ausführungsform für einen Antrieb von einem oder mehreren Robotern verwendet. Insbesondere wird die Antriebsvorrichtung in einem Automatisierungssystem verwendet.

Es ist in der Regel so, dass bekannte industrielle Elektromotoren Umrichter mit Insulated-Gate Bipolar Transistoren (IGBT) verwenden, wobei die Umrichter üblicherweise wie ein "Rucksack" seitlich auf dem Motor montiert sind. Die hierfür notwendigen Kühlkörper vergrößern die Abmessungen und das Gewicht eines solchen Antriebs nennenswert. Ferner können die bekannten Antriebe in der Regel nicht mit dem vollen Strom betrieben werden, weil sonst die Elektronik zu heiß wird. Es ist hier üblich, dass solche Antriebe verglichen mit Motoren ohne angebauten Umrichtern nur ca. 60 % bis 80 % der Nennleistung (Drehmoment) aufweisen. Das wird in Fachkreisen mit De-Rating bezeichnet.

Aufgrund der erfindungsgemäßen thermischen Isolation und der daraus resultierenden thermischen Entkopplung des ersten Aufnahmebereichs und des zweiten Aufnahmebereichs kann eine Antriebsvorrichtung geschaffen werden, die einen Elektromotor, der beispielsweise als ein Servomotor ausgebildet sein kann, mit angebautem Umrichter ohne De-Rating besonders kompakt und ohne Lüfter ermöglicht.

Erfindungsgemäß ist nach einer Ausführungsform vorgesehen, dass statt der Silicium-IGBTs Siliciumcarbid-MOSFETs verwendet werden. Siliciumcarbid-MOSFETs zeichnen sich durch sehr niedrige Verluste und eine besonders hohe Temperaturfestigkeit (bis zu 200 °C) aus. Hierbei wird der Umrichter, der auch als ein Anbauumrichter bezeichnet werden kann, in zwei Temperaturzonen aufgeteilt: der erste Aufnahmebereich und der zweite Aufnahmebereich. Die Siliciumcarbid-MOSFETs werden thermisch an das (heißere) Motorgehäuse, das beispielsweise aus Aluminium gebildet sein kann, angekoppelt. Die sonstige Elektronik wird mittels des thermischen Isolators thermisch hiervon entkoppelt und zum Beispiel über eine Metallkappe, beispielsweise das Gehäuse 607, gekühlt. Nach einer Ausführungsform kann optional der Resolver oder insbesondere der Encoder auch an diese kühlere Zone, also die zweite Temperaturzone, angeschlossen werden. Dies beispielsweise mittels der Verlängerung der zweiten Temperaturzone aufgrund des Rohrs 403 des Blechs 401.

Durch die Erfindung können somit besonders kompakte und energieeffiziente Motoranbauumrichter gebaut werden, bei denen die Nennleistung des Motors nicht oder kaum reduziert werden muss (kein De-Rating).

## Patentansprüche

1. Antriebsvorrichtung (615, 1403), umfassend:
einen Elektromotor (601), wobei
B-seitig (605) am Elektromotor (601) ein erster Aufnahmebereich (101, 801, 901) für eine Umrichterleistungselektronik und ein zweiter Aufnahmebereich (607) für weitere Elektronik gebildet sind, wobei
die beiden Aufnahmebereiche (101, 801, 901, 607) mittels einer thermischen Isolation (301, 1201) voneinander thermisch entkoppelt sind, so dass
im Betrieb des Elektromotors (601) eine erste Temperaturzone (609) im ersten Aufnahmebereich (101, 801, 901) und eine zweite Temperaturzone (613) im zweiten Aufnahmebereich (607) gebildet werden können,
**gekennzeichnet durch**
ein Hitzeschild (401; 403) mit einem in den ersten Aufnahmebereich (101, 801, 901) hineinragenden Abschnitt (403), wobei der Hitzeschild (401; 403) mittels der thermischen Isolation (301, 1201) von dem ersten Aufnahmebereich (101, 801, 901) thermisch entkoppelt ist, wobei der hineinragende Abschnitt (403) einen dritten Aufnahmebereich für einen Positionsgeber (501) umfasst.

2. Antriebsvorrichtung (615, 1403) nach Anspruch 1, wobei der erste Aufnahmebereich (101, 801, 901) mittels eines Lagerschilds (801) des Elektromotors (601) gebildet ist.

3. Antriebsvorrichtung (615, 1403) nach Anspruch 1 oder 2, wobei eine Befestigungseinrichtung (700) für Leistungstransistoren (201) der Umrichterleistungselektronik im ersten Aufnahmebereich (101, 801, 901) lösbar angeordnet ist.

4. Antriebsvorrichtung (615, 1403) nach Anspruch 3, wobei die Befestigungseinrichtung (700) zumindest eine Platte (701) mit zumindest einer auf der Platte (701) befestigten Federklemme (703) zum Festklemmen eines Leistungstransistors (201) umfasst.

5. Antriebsvorrichtung (615, 1403) nach einem der vorherigen Ansprüche, wobei der Hitzeschild (401; 403) mit dem zweiten Aufnahmebereich (607) thermisch gekoppelt ist, so dass die zweite Temperaturzone (613) in den ersten Aufnahmebereich (101, 801, 901) verlängert werden kann.

6. Antriebsvorrichtung (615, 1403) nach einem der vorherigen Ansprüche, wobei der Hitzeschild (401; 403) ein Blech (401) mit einem angeflanschten Rohr (403) als hineinragenden Abschnitt (403) umfasst.

7. Antriebsvorrichtung (615, 1403) nach einem der vorherigen Ansprüche, wobei der erste Aufnahmebereich (101, 801, 901) mit dem Elektromotor (601) thermisch gekoppelt ist.

8. Antriebsvorrichtung (615, 1403) nach einem der vorherigen Ansprüche, wobei der erste Aufnahmebereich (101, 801, 901) einen in sich geschlossenen Rahmen umfasst.

9. Antriebsvorrichtung (615, 1403) nach Anspruch 8, wobei der erste Aufnahmebereich (101, 801, 901) eine Grundplatte (901) umfasst, auf welcher der Rahmen als Kühlkörper angeordnet ist.

10. Antriebsvorrichtung (615, 1403) nach Anspruch 8 oder 9, wobei die Isolation einen in sich geschlossenen Kunststoffrahmen (301, 1201) umfasst, der mit dem Rahmen kraftschlüssig und/oder formschlüssig befestigt ist.

11. Antriebsvorrichtung (615, 1403) nach einem der vorherigen Ansprüche, wobei im ersten Aufnahmebereich (101, 801, 901) als Umrichterleistungselektronik SiC-MOSFETs (201) angeordnet sind.

## Claims

1. Drive device (615, 1403), comprising:
an electric motor (601), wherein
a first receiving area (101, 801, 901) for converter power electronics and a second receiving area (607) for further electronics are formed on the B-side (605) of the electric motor (601), wherein
the two receiving areas (101, 801, 901, 607) are thermally decoupled from one another by means of a thermal isolation (301, 1201), such that
during the operation of the electric motor (601) a first temperature zone (609) can be formed in the first receiving area (101, 801, 901) and a second temperature zone (613) can be formed in the second receiving area (607), **characterized by** a heat shield (401; 403) having a section (403) projecting into the first receiving area (101, 801, 901), wherein the heat shield (401; 403) is thermally decoupled from the first receiving area (101, 801, 901) by means of the thermal isolation (301, 1201), wherein the projecting section (403) comprises a third receiving area for a position sensor (501).

2. Drive device (615, 1403) according to Claim 1, wherein the first receiving area (101, 801, 901) is formed by means of a bearing shield (801) of the electric motor (601).

3. Drive device (615, 1403) according to Claim 1 or 2, wherein a fixing unit (700) for power transistors (201) of the converter power electronics is arranged releasably in the first receiving area (101, 801, 901).

4. Drive device (615, 1403) according to Claim 3, wherein the fixing unit (700) comprises at least one plate (701) with at least one spring clamp (703) fixed on the plate (701) and serving for fixedly clamping a power transistor (201).

5. Drive device (615, 1403) according to any one of the preceding claims, wherein the heat shield (401; 403) is thermally coupled to the second receiving area (607), such that the second temperature zone (613) can be lengthened into the first receiving area (101, 801, 901).

6. Drive device (615, 1403) according to any one of the preceding claims, wherein the heat shield (401; 403) comprises a metal sheet (401) having a flanged tube (403) as projecting section (403).

7. Drive device (615, 1403) according to any one of the preceding claims, wherein the first receiving area (101, 801, 901) is thermally coupled to the electric motor (601).

8. Drive device (615, 1403) according to any one of the preceding claims, wherein the first receiving area (101, 801, 901) comprises a self-contained frame.

9. Drive device (615, 1403) according to Claim 8, wherein the first receiving area (101, 801, 901) comprises a baseplate (901), on which the frame is arranged as heat sink.

10. Drive device (615, 1403) according to Claim 8 or 9, wherein the isolation comprises a self-contained plastic frame (301, 1201), which is fixed to the frame in a force-locking and/or positively locking manner.

11. Drive device (615, 1403) according to any one of the preceding claims, wherein SiC MOSFETs (201) are arranged as converter power electronics in the first receiving area (101, 801, 901).

## Revendications

1. Dispositif d'entraînement (615, 1403), comprenant :
un moteur électrique (601),
une première zone de logement (101, 801, 901) prévue pour un système électronique de puissance de convertisseur et une deuxième zone de logement (607) prévue pour un autre système électronique étant formées du côté B (605) au niveau du moteur électrique (601) ;
les deux zones de logement (101, 801, 901, 607) étant découplées thermiquement l'une de l'autre au moyen d'une isolation thermique (301, 1201), de sorte qu'une première zone de température (609) peut être formée dans la première zone de logement (101, 801, 901) et qu'une deuxième zone de température (613) peut être formée dans la deuxième zone de logement (607) en situation de fonctionnement du moteur électrique (601) ;
**caractérisé par** un bouclier thermique (401 ; 403) avec une section (403) rentrant dans la première zone de logement (101, 801, 901) ;
le bouclier thermique (401 ; 403) étant découplé thermiquement de la première zone de logement (101, 801, 901) à l'aide de l'isolation thermique (301, 1201), la section (403) rentrant à l'intérieur comprenant une troisième zone de logement pour un capteur de position (501).

2. Dispositif d'entraînement (615, 1403) selon la revendication 1, la première zone de logement (101, 801, 901) étant formée à l'aide d'un flasque (801) du moteur électrique (601).

3. Dispositif d'entraînement (615, 1403) selon la revendication 1 ou 2, un dispositif de fixation (700) pour transistors de puissance (201) du système électronique de puissance de convertisseur étant disposé de façon amovible dans la première zone de logement (101, 801, 901).

4. Dispositif d'entraînement (615, 1403) selon la revendication 3, le dispositif de fixation (700) comprenant au moins une plaque (701) avec au moins une borne à ressort (703) fixée sur la plaque (701) pour coincer un transistor de puissance (201).

5. Dispositif d'entraînement (615, 1403) selon l'une quelconque des revendications précédentes, le bouclier thermique (401 ; 403) étant couplé thermiquement à la deuxième zone de logement (607), de sorte que la deuxième zone de température (613) puisse être rallongée dans la première zone de logement (101, 801, 901).

6. Dispositif d'entraînement (615, 1403) selon l'une quelconque des revendications précédentes, le bouclier thermique (401 ; 403) comprenant une tôle (401) avec un tube (403) bridé servant de section (403) rentrant à l'intérieur.

7. Dispositif d'entraînement (615, 1403) selon l'une quelconque des revendications précédentes, la première zone de logement (101, 801, 901) étant couplée thermiquement au moteur électrique (601).

8. Dispositif d'entraînement (615, 1403) selon l'une quelconque des revendications précédentes, la première zone de logement (101, 801, 901) comprenant un cadre fermé en soi.

9. Dispositif d'entraînement (615, 1403) selon la revendication 8, la première zone de logement (101, 801, 901) comprenant une plaque de base (901) sur laquelle est disposé le cadre en tant que corps de refroidissement.

10. Dispositif d'entraînement (615, 1403) selon la revendication 8 ou 9, l'isolation comprenant un cadre en matière plastique (301, 1201) fermé en soi fixé au cadre par complémentarité de forces et/ou par complémentarité de formes.

11. Dispositif d'entraînement (615, 1403) selon l'une quelconque des revendications précédentes, des SiC-MOSFETs (201) servant de système électronique de puissance de convertisseur étant disposés dans la première zone de logement (101, 801, 901).
